# EUROPEAN PATENT SPECIFICATION

(11) **EP 1 425 429 B1**
(45) Date of publication and mention of the grant of the patent: **10.05.2006**
(21) Application number: 02772754.4
(22) Date of filing: 17.09.2002
(51) Int. Cl.: C22C 19/05

(54) **COMPONENT REPAIR MATERIALS**
REPARATURMATERIAL FÜR BAUTEILE
MATERIAUX DE REPARATION DE COMPOSANTS

(30) Priority: 17.09.2001 IE 20010834
(43) Date of publication of application: 09.06.2004
(73) Proprietor: Sifco Research & Development Limited, Blackrock, Co Cork (IE)
(72) Inventor: HUMM, Stephan Material Science Institute, 52056 Aachen (DE); LUGSCHEIDER, E. Material Science Institute, 52056 Aachen (DE)
(74) Representative: Lane, Cathal Michael
(86) International application number: PCT/IE2002/000134
(87) International publication number: WO 2003/025237

(56) References cited:
- EP-A- 0 351 948
- WO-A-99/21680
- US-A- 5 523 170
- US-A- 5 783 318

## Description

### Field of the Invention

The present invention relates to component repair materials generally, and in particular to the repair of metallic components. Of particular interest are components constructed of alloys (more particularly superalloys) and their repair using suitable repair materials.

### Background of the Invention

Alloys and in particular those alloys which are capable of withstanding great pressures and temperatures are of interest as components formed with these materials are often costly to produce and it is more economical to repair rather than replace them.

A well known technique for repairing cracks and other fractures in an article such as a component is brazing. Accordingly there is a need for brazing materials which are suitable for use for repairing components. It is desirable that the material used as a braze results in a repair that restores the component to a useable state. Braze materials and techniques which function well to repair alloys such as for example superalloys are thus important. Superalloys are well known to those skilled in the art. Such materials are used to construct many types of component and in particular in the context of the present invention the alloys (superalloys) that are most of interest are those used in the construction of turbine components (gas turbine components) of the type found in (turbine) engines of aircraft and the like.

Use of braze materials can help prolong the in-service lifetime of components which if not repaired to a sufficiently high strength would otherwise have to be discarded and replaced. Brazing techniques are well known to those skilled in the art and include vacuum techniques. Such techniques are not discussed in detail herein.

It will be appreciated that one of the main determining factors of the strength of a repair is the ability of the repair to withstand very high temperatures. It will be appreciated that the temperatures reached in, for example a turbine engine, can be very high so that not all braze materials (articles) are suited for repair. In particular it is desirable to find materials which are suited to the joining of superalloy materials for the purpose of repair (e.g. joining opposing sides of a fracture). Of particular interest in the context of the present invention are Single Crystal ("SC") and Directionally Solidified ("DS") superalloys.

The present invention relates to compositions which are suited to use as repair materials for the repair of superalloy materials. In particular the present invention relates to a solid composition in particular a powder material which may be so used. Of particular interest are compositions in powder form. More particularly, this invention relates to a braze material comprising a braze alloy (the braze alloy may be considered an alloy formed from a powder mixture). The materials employed in the present invention have a high melting temperature. The invention also relates to a process for braze repairing components for example turbine components. Also within the scope of the invention is an article repaired by a process of the invention.

It has been found that many materials which are suitable for repairing conventional articles/components do not sufficiently well repair SC or DS superalloys. It is desirable to provide repair materials and/or repair methods which are particularly suited to repair of SC or DS materials.

Nickel and cobalt-based superalloys are the superalloys most often used in the manufacture of turbine components such as turbine blades. SC or DS superalloys incorporating these materials are of particular interest in the present invention. Such materials have not been repaired sufficiently well with prior art compositions. It is desirable that the matenals and methods of the invention allow for reduced use of the melting point depressant boron, which is believed to reduce repair strengths in repair materials. In particular it is desirable that the compositions of the invention are considered low-boron compositions. Repair materials used with SC or DS materials usually contain relatively high amounts of boron.

### Object of the Invention

It is an object of this invention to provide an alternative braze material for use in the repair of substrates/components and in particular to those substrates comprised of superalloys such as nickel and cobalt-based superalloys.

The present invention seeks to address the requirement for compositions and methods which prolong the in-service life of components in particular components of gas turbines.

The invention provides a composition suitable for the repair of superalloys for example to repair damage which occurs during service operations.

It is desirable that the repair results in a repair of a desired uniform microstructure that produces mechanical and environmental properties which are similar to that of the superalloy material (in particular SC or DS) itself. In particular it is desirable that the repair results in a material which is resistant to oxidation, deformation etc. at high temperatures (the temperatures reached in a turbine engine).

In particular conventional alloys used for repair such as brazing - often referred to as "repair alloys" comprise a "filler" composition and a "braze" composition. The filler composition is a composition which is itself usually an alloy and which has a composition that is similar to that of the material to be repaired. The material to be repaired is often referred to as the "parent" alloy. The braze composition is also often similar to the composition of the parent alloy and additionally comprises at least one and usually a number of additional components. In particular it is desirable that additional components usually have at least the overall effect of depressing the melting point of the braze composition. As stated above it is desirable to use low amounts of boron.

The repair material which forms a repair alloy ( or braze alloy) may be thus considered a mixture of at least two alloy forming powders - the parent alloy and the braze alloy. The repair alloy will often have a defined mixture composition range.

### Summary of the Invention

In the present invention there is provided a composition (the composition is suitable for the repair of articles at least partially comprised of alloy, in particular superalloys and more particularly SC or DS superalloys) comprising Ni and the following additional components:
(i) Co in an amount in the range from 4.5 to 11%;
(ii) Cr in an amount in the range from 7 to 12%;
(iii) Mo in an amount in the range from 0.5 to 1.4%;
(iv) W in an amount in the range from 1.8 to 4.5%;
(v) Re in an amount in the range from 1.0 to 2.6%;
(vi) Al in an amount in the range from 2.4 to 5.6%;
(vii) Ta in an amount in the range from 2.4 to 5.9%;
(viii) Hf in an amount in the range from 2.5% to 6.0%;
(ix) C in an amount up to 0.1%;
(x) B in an amount in the range from 0.2 to 2.2%;
(xi) Zr in the range from 0 to 0.02%;
(xii) Fe in an amount in the range from 0.07 to 0.2%; and
(xiii) Mn in an amount in the range from 0.03 to 0.1%,
wherein all percentages are by weight based on the total weight of the composition. Ni will make up the balance of the composition (which is not taken up by components (i) to (xiii)).

For the components C and Zr it is desired that these are each independently present in an amount of at least about 0.1%.

It is preferred that the boron component is present in an amount of 0.4% to 1.2% by weight based on the total weight of the composition. It is preferred that the hafnium component is present in an amount of between 2.5 and 4.6% by weight based on the total weight of the composition.

It is desirable that both boron and hafnium are present in the composition in these preferred ranges.

A composition such as that just described is useful for the repair of turbine components. The area repaired with the material has minimum voiding and a desirable microstructure.

The compositions of the invention can be considered braze material for repairing an article. An important component in the composition is Hf and it is desirable that this component is present. The presence of this component is thought to act as a melting point depressant causing the repair composition to have a lower melting point than at least some superalloy materials. The presence of Hf and B together may provide a combined melting point depression effect so that the presence of both of these components is desirable. In other words it is an advantage of the invention that the repair material comprises Hf and B. The invention thus relates to the use of Hf and desirably Hf/B in the preparation of a repair composition for the repair of superalloys. Desirably the composition is provided in powder form. The braze or weld formed (e.g. by application of a composition of the invention under suitable conditions to effect repair of a component) will have similar physical properties to that of the component. The braze or weld formed material will have an alloy form.

Suitably the alloy of the component being repaired is a SC or DS superalloy.

A method of repair may involve the step of heating the repair material and/or an area of an article to which it is to be applied to a suitable temperature (for example in the range from 1200 °C to 1250 °C) for a period of time suitable to accomplish the repair, and in particular to heat the area to be repaired. The heating step may be carried out subsequent to application of the composition to the repair area, simultaneous with the application of the composition or prior to application of composition as appropriate. The invention also relates to an article repaired by a method of the present invention.

Further heating can be carried out to temper the repair and indeed the repaired article (at least the repair area). A secondary heating (tempering) step may additionally be carried out by heating at least the repaired area (and desirably the whole article being repaired) to a temperature in the range from 1125°C to 1175°C. Such secondary heating step may be carried out for a period suitable to temper the repair. Such periods are often greater than about 6 hours and desirably the secondary heating is carried out for a period of at least 6 to 25 hours.

### Brief Description of the Figures

Figure 1 is an image produced by a scanning electron microscope [SEM] of a turbine component which has been brazed as described in the example below;
Figure 2 is an image produced by a scanning electron microscope [SEM] of the same component as shown in Figure 1 following tempering of the component.

### Detailed Description of the Invention

### Experimental Procedure and Results

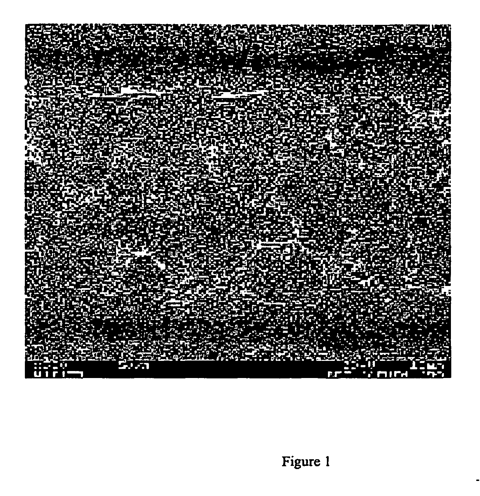

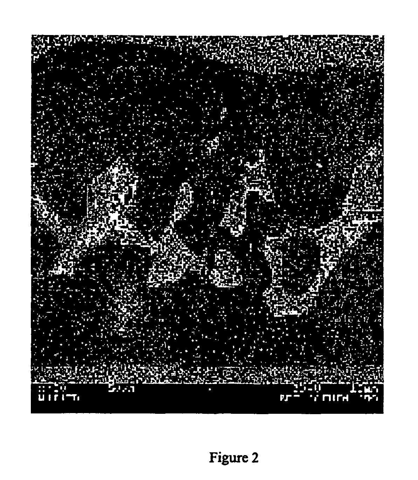

Powders of a repair alloy composition (composition 3 below) according to the present invention in paste form were applied in standard slotted lab samples, slots 0.3 mm wide, brazed under controlled parameters in a temperature range of 1200 - 1250 for 15-45 minutes (optimum 30 minutes) followed by a second temperature treatment in the range of 1125-1175°C for at least 6-25 hours (10 hours as tested). A component prepared according to the experimental procedure above demonstrated a minimal microstructure (see Figures 1 and 2). When tested against SC CMSX-4 material it produced satisfactory tensile properties equivalent to about 60-70% of CMSX-4 material. It produced equivalent static oxidation properties. [CMSX-4 is a brand name of a single crystal material produced by Canon Muskegan in Michigan in the US].

### Further Compositions of the present invention:

The term "nominal" is used to expressly acknowledge the fact that the compositions may not be in the exact percentage amounts listed below but will be within tolerances acceptable to the person skilled in the art. Such tolerance parameters are within the skill and understanding of the person skilled in the art.

### Composition No. 1.

(i) Co Nominal 6%;
(ii) Cr Nominal 10.6%;
(iii) Mo Nominal 0.75%;
(iv) W Nominal 2.45%;
(v) Re Nominal 1.4%;
(vi) Al Nominal 3.1%;
(vii) Ta Nominal 3.1%;
(viii) Hf Nominal 2.75%;
(ix) C in an amount up to about 0.1%;
(x) B Nominal 1.26%;
(xi) Zr Nominal up to 0.2 %;
(xii) Fe Nominal 0.1% and
(xiii) Mn Nominal 0.05%.
Balance is Nickel.

### Composition No. 2.

(i) Co Nominal 6%;
(ii) Cr Nominal 10.6%;
(iii) Mo Nominal 0.75%;
(iv) W Nominal 2.45%;
(v) Re Nominal 1.4%;
(vi) Al Nominal 3.1%;
(vii) Ta Nominal 3.1%;
(viii) Hf Nominal 2.75%;
(ix) C in an amount up to about 0.1%;
(x) B Nominal 1.51%;
(xi) Zr Nominal up to 0.2%;
(xii) Fe Nominal 0.1% and
(xiii) Mn Nominal 0.05%.
Balance is Nickel.

### Composition No. 3.

(i) Co Nominal 8.3%;
(ii) Cr Nominal 8.6%;
(iii) Mo Nominal 1.0%;
(iv) W Nominal 3.4%;
(v) Re Nominal 1.9%;
(vi) Al Nominal 4.3%;
(vii) Ta Nominal 4.4%;
(viii) Hf Nominal 3.0%;
(ix) C in an amount up to about 0.1%;
(x) B Nominal 1.0%;
(xi) Zr Nominal up to 0.2%;
(xii) Fe Nominal 0.13% and
(xiii) Mn Nominal 0.07%.
Balance is Nickel.

### Composition No. 4.

(i) Co Nominal 8.1%;
(ii) Cr Nominal 8.5%;
(iii) Mo Nominal 1%;
(iv) W Nominal 3.3%;
(v) Re Nominal 1.9%;
(vi) Al Nominal 4.2%;
(vii) Ta Nominal 4.3%;
(viii) Hf Nominal 4.5%;
(ix) C in an amount up to about 0.1%;
(x) B Nominal 1.0%;
(xi) Zr Nominal from up to 0.2 %;
(xii) Fe Nominal 0.13% and
(xiii) Mn Nominal 0.07%.
Balance is Nickel

### Results with Compositions 1-4.

Test results for Compositions 1-4 used as braze materials (as per the above description) are given in the Table below. The results are tensile test results at 850°C on braze joints made from each of these braze compositions. The data is expressed as tensile strength of a test piece containing a 0.8 mm wide gap, filled with braze material. The tensile strength was measured at 850°C and is expressed as UTS (Ultimate Tensile Strength). The units are MPa (Mega Pascals).

| **Composition No.** | **UTS, MPa** |
|---|---|
| 1. | 247 |
| 2. | 283 |
| 3. | 208 |
| 4. | 403 |

Compositions of the present invention have thus been shown to be suitable materials for repair of alloy components, in particular by braze repair.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

## Claims

1. A composition comprising Ni and the following additional components:
(i) Co in an amount in the range from 4.5 to 11%;
(ii) Cr in an amount in the range from 7 to 12%;
(iii) Mo in an amount in the range from 0.5 to 1.4%;
(iv) W in an amount in the range from 1.8 to 4.5%;
(v) Re in an amount in the range from 1.0 to 2.6%;
(vi) Al in an amount in the range from 2.4 to 5.6%;
(vii) Ta in an amount in the range from 2.4 to 5.9%;
(viii) Hf in an amount in the range from 2.5% to 6.0%;
(ix) C in an amount up to about 0.1%;
(x) B in an amount in the range from 0.2 to 2.2%;
(xi) Zr in the range from 0 to 0.02%;
(xii) Fe in an amount in the range from 0.07 to 0.2%; and
(xiii) Mn in an amount in the range from 0.03 to 0.1%,
wherein all percentages are by weight based on the total weight of the composition and the weight balance of the composition which is not taken up by components (i) to (xiii) being made up by Ni.

2. A composition according to Claim 1 wherein B is present in an amount from 0.4 to 1.2% by weight based on the total weight of the composition.

3. A composition according to Claim 1 or Claim 2 wherein Hf is present in an amount from 2.5 to 4.6% by weight based on the total weight of the composition.

4. A composition according to any preceding claim wherein the composition is in powder form.

5. A composition comprising:
(i) Co 6%;
(ii) Cr 10.6%;
(iii) Mo 0.75%;
(iv) W 2.45%;
(v) Re 1.4%;
(vi) Al 3.1%;
(vii) Ta 3.1%;
(viii) Hf 2.75%;
(ix) C in an amount up to about 0.1%;
(x) B 1.26%;
(xi) Zr from 0 to 0.02%;
(xii) Fe 0.1% and
(xiii) Mn 0.05%
and the weight balance of the composition which is not taken up by components (i) to (xiii) being made up by Ni.

6. A composition comprising:
(i) Co 6%;
(ii) Cr 10.6%;
(iii) Mo 0.75%;
(iv) W 2.45%;
(v) Re 1.4%;
(vi) Al 3.1%;
(vii) Ta 3.1%;
(viii) Hf 2.75%;
(ix) C in an amount up to about 0.1%;
(x)B 1.51%;
(xi) Zr from 0 to 0.02%;
(xii) Fe 0.1% and
(xiii) Mn 0.05%
and the weight balance of the composition which is not taken up by components (i) to (xiii) being made up by Ni.

7. A composition comprising:
(i) Co 8.3%;
(ii) Cr 8.6%;
(iii) Mo 1.0%;
(iv) W 3.4%;
(v) Re 1.9%;
(vi) Al 4.3%;
(vii) Ta 4.4%;
(viii) Hf 3.0%;
(ix) C in an amount up to about 0.1%;
(x) B 1.0%;
(xi) Zr from 0 to 0.02%;
(xii) Fe 0.13% and
(xiii) Mn 0.07%
and the weight balance of the composition which is not taken up by components (i) to (xiii) being made up by Ni.

8. A composition comprising:
(i) Co 8.1%;
(ii) Cr 8.5%;
(iii) Mo 1%;
(iv) W 3.3%;
(v) Re 1.9%;
(vi) Al 4.2%;
(vii) Ta 4.3%;
(viii) Hf 4.5%;
(ix) C in an amount up to about 0.1%;
(x) B 1.0%;
(xi) Zr from 0 to 0.02%;
(xii) Fe 0.13% and
(xiii) Mn 0.07%,
and the weight balance of the composition which is not taken up by components (i) to (xiii) being made up by Ni.

9. Use of a composition as defined in any preceding claim for the repair of a superalloy material.

10. Use according to Claim 9 for brazing repair.

11. A process of repairing an article comprising the steps of heating a composition according to any one of Claims 1 to 8 and/or heating an area of an article to which the compositions is to be applied, to a suitable temperature for a sufficient period of time to accomplish the repair.

12. A process according to Claim 11 wherein the temperature is in the range from 1200°C to 1250°C.

13. A process according to Claim 11 or Claim 12 wherein at least the repair area is subsequently tempered.

14. A process according to Claim 13 wherein the tempering is carried out by heating to a temperature in the range from 1125°C to 1175°C.

15. An article repaired by a process according to any one of claims 11 to 14.

## Revendications

1. Composition comprenant Ni et les composants supplémentaires suivants :
(i) Co, dans une quantité comprise entre 4,5 et 11 % ;
(ii) Cr, dans une quantité comprise entre 7 et 12 % ;
(iii) Mo, dans une quantité comprise entre 0,5 et 1,4 % ;
(iv) W, dans une quantité comprise entre 1,8 et 4,5 % ;
(v) Re, dans une quantité comprise entre 1,0 et 2,6 % ;
(vi) Al, dans une quantité comprise entre 2,4 et 5,6 % ;
(vii) Ta, dans une quantité comprise entre 2,4 et 5,9 % ;
(viii) Hf, dans une quantité comprise entre 2,5 et 6,0 % ;
(ix) C, dans une quantité allant jusqu'à 0,1 % ;
(x) B, dans une quantité comprise entre 0,2 et 2,2 % ;
(xi) Zr, dans une quantité comprise entre 0 et 0,02 % ;
(xii) Fe, dans une quantité comprise entre 0,07 et 0,2 % ; et
(xiii) Mn, dans une quantité comprise entre 0,03 et 0,1 %,
où tous les pourcentages sont en poids, sur la base du poids total de la composition, et le reste en poids de la composition qui n'est pas occupé par les composants (i) à (xiii) est constitué de Ni.

2. Composition selon la revendication 1, dans laquelle B est présent dans une quantité comprise entre 0,4 et 1,2 % en poids, sur la base du poids total de la composition.

3. Composition selon la revendication 1 ou la revendication 2, dans laquelle Hf est présent dans une quantité comprise entre 2,5 et 4,6 % en poids, sur la base du poids total de la composition.

4. Composition selon l'une quelconque des revendications précédentes, dans laquelle la composition est sous forme de poudre.

5. Composition comprenant :
(i) Co: 6 % ;
(ii) Cr: 10,6 % ;
(iii) Mo: 0,75 % ;
(iv) W: 2,45 % ;
(v) Re: 1,4 % ;
(vi) Al: 3,1 % ;
(vii) Ta: 3,1 % ;
(viii) Hf: 2,75 % ;
(ix) C: dans une quantité allant jusqu'à environ 0,1 % ;
(x) B: 1,26 % ;
(xi) Zr: de 0 à 0,02 % ;
(xii) Fe: 0,1 % ; et
(xiii) Mn: 0,05 %,
et le reste en poids de la composition qui n'est pas occupé par les composants (i) à (xiii) est constitué de Ni.

6. Composition comprenant :
(i) Co: 6 % ;
(ii) Cr: 10,6 % ;
(iii) Mo: 0,75 % ;
(iv) W: 2,45 % ;
(v) Re: 1,4 % ;
(vi) Al: 3,1 % ;
(vii) Ta: 3,1 % ;
(viii) Hf: 2,75 % ;
(ix) C, dans une quantité allant jusqu'à environ 0,1 % ;
(x) B: 1,51 % ;
(xi) Zr 0 à 0,02 % ;
(xii) Fe: 0,1 % ; et
(xiii) Mn: 0,05 %,
et le reste en poids de la composition qui n'est pas occupé par les composants (i) à (xiii) est constitué de Ni.

7. Composition comprenant :
(i) Co: 8,3 % ;
(ii) Cr: 8,6 % ;
(iii) Mo: 1,0 % ;
(iv) W: 3,4 % ;
(v) Re: 1,9 % ;
(vi) Al: 4,3 % ;
(vii) Ta: 4,4 % ;
(viii) Hf: 3,0 % ;
(ix) C, dans une quantité allant jusqu'à environ 0,1 % ;
(x) B: 1,0 % ;
(xi) Zr: de 0 à 0,02 % ;
(xii) Fe: 0,13 % ; et
(xiii) n: 0,07 %,
et le reste en poids de la composition qui n'est pas occupé par les composants (i) à (xiii) est constitué de Ni.

8. Composition comprenant :
(i) Co: 8,1 % ;
(ii) Cr: 8,5 % ;
(iii) Mo: 1 % ;
(iv) W: 3,3 % ;
(v) Re: 1,9 % ;
(vi) Al: 4,2 % ;
(vii) Ta: 4,3 % ;
(viii) Hf: 4,5 % ;
(ix) C, dans une quantité allant jusqu'à environ 0,1 % ;
(x) B: 1,0 % ;
(xi) Zr: de 0 à 0,02 % ;
(xii) Fe: 0,13 % ; et
(xiii) Mn: 0,07 %,
et le reste en poids de la composition qui n'est pas occupé par les composants (i) à (xiii) est constitué de Ni.

9. Utilisation d'une composition telle que définie dans l'une quelconque des revendications précédentes pour la réparation d'un matériau de superalliage.

10. Utilisation selon la revendication 9 pour une réparation par brasage.

11. Procédé de réparation d'un article comprenant les étapes consistant à chauffer une composition selon l'une quelconque des revendications 1 à 8 et/ou à chauffer une zone d'un article auquel les compositions doivent être appliquées, à une température appropriée et pendant une durée suffisante pour accomplir la réparation.

12. Procédé selon la revendication 11, dans lequel la température est dans la gamme de 1 200 °C à 1 250 °C.

13. Procédé selon la revendication 11 ou la revendication 12, dans lequel au moins la zone de réparation est ensuite trempée.

14. Procédé selon la revendication 13, dans lequel la trempe est effectuée par chauffage à une température comprise dans la gamme de 1 125 °C à 1 175 °C.

15. Article réparé par un procédé selon l'une quelconque des revendications 11 à 14.

## Patentansprüche

1. Zusammensetzung, umfassend Ni und die folgenden zusätzlichen Komponenten:
(i) Co in einer Menge im Bereich von 4,5 bis 11 %;
(ii) Cr in einer Menge im Bereich von 7 bis 12 %;
(iii) Mo in einer Menge im Bereich von 0,5 bis 1,4 %;
(iv) W in einer Menge im Bereich von 1,8 bis 4,5 %;
(v) Re in einer Menge im Bereich von 1,0 bis 2,6 %;
(vi) Al in einer Menge im Bereich von 2,4 bis 5,6 %;
(vii) Ta in einer Menge im Bereich von 2,4 bis 5,9 %;
(viii) Hf in einer Menge im Bereich von 2,5 bis 6,0 %;
(ix) C in einer Menge bis zu etwa 0,1 %;
(x) B in einer Menge im Bereich von 0,2 bis 2,2 %;
(xi) Zr im Bereich von 0 bis 0,02 %;
(xii) Fe in einer Menge im Bereich von 0,07 bis 0,2 % und
(xiii) Mn in einer Menge im Bereich von 0,03 bis 0,1 %,
wobei alle Prozentwerte auf das Gewicht bezogen sind, bezogen auf das Gesamtgewicht der Zusammensetzung, und der Rest des Gewichts der Zusammensetzung, der nicht durch die Komponenten (i) bis (xiii) abgedeckt wird, aus Ni besteht.

2. Zusammensetzung nach Anspruch 1, wobei B in einer Menge von 0,4 bis 1,2 Gew.-%, bezogen auf das Gesamtgewicht der Zusammensetzung, vorhanden ist.

3. Zusammensetzung nach Anspruch 1 oder Anspruch 2, wobei Hf in einer Menge von 2,5 bis 4,6 Gew.-%, bezogen auf das Gesamtgewicht der Zusammensetzung, vorhanden ist.

4. Zusammensetzung nach einem der vorhergehenden Ansprüche, wobei die Zusammensetzung in Pulverform vorliegt.

5. Zusammensetzung, umfassend:
(i) 6 % Co;
(ii) 10,6 % Cr;
(iii) 0,75 % Mo;
(iv) 2,45 % W;
(v) 1,4 % Re;
(vi) 3,1 % Al;
(vii) 3,1 % Ta;
(viii) 2,75 % Hf;
(ix) C in einer Menge bis zu etwa 0,1 %;
(x) 1,26 % B;
(xi) 0 bis 0,02 % Zr;
(xii) 0,1 % Fe und
(xiii) 0,05 % Mn
und wobei der Rest des Gewichts der Zusammensetzung, der nicht durch die Komponenten (i) bis (xiii) abgedeckt wird, aus Ni besteht.

6. Zusammensetzung, umfassend:
(i) 6 % Co;
(ii) 10,6 % Cr;
(iii) 0,75 % Mo;
(iv) 2,45 % W;
(v) 1,4 % Re;
(vi) 3,1 % Al;
(vii) 3,1 % Ta;
(viii) 2,75 % Hf;
(ix) C in einer Menge von bis zu etwa 0,1 %;
(x) 1,51 % B;
(xi) von 0 bis 0,02 % Zr;
(xii) 0,1 % Fe und
(xiii) 0,05 % Mn
und wobei der Rest des Gewichts der Zusammensetzung, der nicht durch die Komponenten (i) bis (xiii) abgedeckt wird, aus Ni besteht.

7. Zusammensetzung, umfassend:
(i) 8,3 % Co;
(ii) 8,6 % Cr;
(iii) 1,0 % Mo;
(iv) 3,4 % W;
(v) 1,9 % Re;
(vi) 4,3 % Al;
(vii) 4,4 % Ta;
(viii) 3,0 % Hf;
(ix) C in einer Menge von bis zu etwa 0,1 %;
(x) 1,0 % B;
(xi) von 0 bis 0,02 % Zr;
(xii) 0,13 % Fe und
(xiii) 0,07 % Mn
und wobei der Rest des Gewichts der Zusammensetzung, der nicht durch die Komponenten (i) bis (xiii) abgedeckt wird, aus Ni besteht.

8. Zusammensetzung, umfassend:
(i) 8,1 % Co;
(ii) 8,5 % Cr;
(iii) 1 % Mo;
(iv) 3,3 % W;
(v) 1,9 % Re;
(vi) 4,2 % Al;
(vii) 4,3 % Ta;
(viii) 4,5 % Hf;
(ix) C in einer Menge von bis zu etwa 0,1 %;
(x) 1,0 % B;
(xi) von 0 bis 0,02 % Zr;
(xii) 0,13 % Fe und
(xiii) 0,07 % Mn
und wobei der Rest des Gewichts der Zusammensetzung, der nicht durch die Komponenten (i) bis (xiii) abgedeckt wird, aus Ni besteht.

9. Verwendung einer in einem beliebigen der vorhergehenden Ansprüche definierten Zusammensetzung zur Reparatur eines Superlegierungsmaterials.

10. Verwendung nach Anspruch 9 für die Hartlötreparatur.

11. Verfahren zur Reparatur eines Gegenstandes, umfassend die Schritte des Erwärmens einer Zusammensetzung nach einem der Ansprüche 1 bis 8 und/oder das Erwärmen eines Bereichs eines Gegenstandes, auf den die Zusammensetzungen aufzutragen sind, auf eine Temperatur und einen Zeitraum, die geeignet sind, um die Reparatur zu bewerkstelligen.

12. Verfahren nach Anspruch 11, wobei die Temperatur im Bereich von 1200 °C bis 1250 °C liegt.

13. Verfahren nach Anspruch 11 oder Anspruch 12, wobei wenigstens der Reparaturbereich anschließend getempert wird.

14. Verfahren nach Anspruch 13, wobei das Tempern erfolgt, indem auf eine Temperatur im Bereich von 1125 °C bis 1175 °C erwärmt wird.

15. Gegenstand, der durch ein Verfahren nach einem der Ansprüche 11 bis 14 repariert ist.
